# FASCICULE DE BREVET EUROPEEN

(11) **EP 1 794 709 B1**
(45) Date de publication et mention de la délivrance du brevet: **11.08.2010**
(21) Numéro de dépôt: 05758459.1
(22) Date de dépôt: 29.06.2005
(51) Int. Cl.: G06K 19/077, G06K 19/04

(54) **SUPPORT ADAPTATEUR DE CARTE A PUCE DEVERROUILLABLE ET PROCEDE DE FABRICATION DU SUPPORT**
UNTERSTÜTZUNG ZUR ANPASSUNG EINER ENTRIEGELBAREN CHIPKARTE UND HERSTELLUNGSVERFAHREN FÜR SOLCH EINE UNTERSTÜTZUNG
SUPPORT FOR ADAPTING A CHIP CARD CAPABLE OF BEING UNLOCKED AND METHOD FOR MAKING SUCH A SUPPORT

(30) Priorité: 20.09.2004 FR 0452096
(43) Date de publication de la demande: 13.06.2007
(73) Titulaire: Gemalto SA, 92190 Meudon (FR)
(72) Inventeur: MARTINENT, Jean-François, F-13090 Aix en Provence (FR); FIDALGO, Jean-Christophe, F-13420 Gemenos (FR)
(86) Numéro de dépôt international: PCT/EP2005/053063
(87) Numéro de publication internationale: WO 2006/032547

(56) Documents cités:
- EP-A- 0 638 873
- WO-A-94/18644
- DE-A1- 19 906 570
- FR-A- 2 794 264
- FR-A- 2 816 766
- FR-A- 2 827 488
- US-B1- 6 554 193
- US-B1- 6 561 432
- PATENT ABSTRACTS OF JAPAN vol. 1999, no. 12, 29 octobre 1999 (1999-10-29) & JP 11 203440 A (MG:KK), 30 juillet 1999 (1999-07-30)

## Description

La présente invention concerne le domaine des cartes à puce.

Elle concerne plus particulièrement un adaptateur de forme pour carte à puce permettant d'obtenir un autre format de carte à puce. Les différents formats visés sont les formats standards existants dans le domaine de la carte à puce et présentés ci-après.

Il existe principalement trois formats standards de carte à puce sur le marché. Le premier "ID-1" est le format relatif à la norme ISO 7816 : 54mm x 85mm x 0,76mm pour les cartes à puce, essentiellement destinées à des opérations de communication, d'identification, ou de télébilletique par exemple.

Le second "ID-000" est relatif à la norme dite Plug-in UICC, essentiellement destiné à être inséré dans un téléphone mobile mais pouvant le cas échéant être utilisés dans d'autres dispositifs de communication ou des lecteurs de type USB. Elles ont un corps de carte de forme rectangulaire de 15mm x 25mm x 0, 76mm, avec un détrompeur de 3mm par 3mm sur un coin du support de la carte.

Le troisième, depuis février 2004, est relatif aux cartes dites de troisième génération "plug 3G" ou cartes mini-UICC dont la diminution de format résulte notamment d'une tendance à la miniaturisation des téléphones portables. Le format normalisé est 15mm X 12mm X 0,76mm avec également un détrompeur de 2,5mm par 2,5mm sur un coin du support de la carte.

On connaît différents procédés de fabrication d'adaptateur plug-in UICC dans lesquels, un adaptateur de format est extrait manuellement d'un premier support au format ISO grâce à une prédécoupe au format de l'adaptateur.

Ainsi la demande de brevet FR 2794264 prévoit un adaptateur Plug-in UICC / carte réduite (mini-UICC) conformé de manière à recevoir une carte mini-UICC ou "Plug 3G" (troisième génération). L'adaptateur est délimité par une prédécoupe 20 dans un corps de carte au format ISO, puis extrait manuellement de ce corps en brisant des bretelles le reliant au corps de carte ISO.

La carte mini-UICC est ensuite fixée à l'intérieur de l'adaptateur pour une utilisation au format Plug-in ou ISO. Elle est produite par ailleurs avec un profil de tranche adapté (convexe ou concave) permettant le montage et blocage amovible de la carte mini UICC dans l'adaptateur qui comporte un profil complémentaire.

Cette solution présente l'inconvénient lors de montages /démontages répétés de la mini-carte dans l'adaptateur d'introduire des contraintes dans le microcircuit de la mini-carte, contraintes qui peuvent être préjudiciables à la tenue mécanique et électrique du microcircuit.

Le document EP 0638 873 A2 décrit un support de circuit intégré comprenant une ouverture et un fond formé par un film support portant une couche adhésive sensible à la pression. Une mini-carte est fixée dans l'ouverture du support sur la couche adhésive du film de support.

Lors de l'enlèvement de la mini-carte de son support, aucune contrainte excessive n'est exercée sur le microcircuit et aucune bavure ne demeure sur le bord périphérique du support.

Cette solution n'est pas satisfaisante car elle introduit une surépaisseur sur le fond de cavité qui implique d'avoir une épaisseur différente, plus faible pour la mini-carte.

En outre, la fabrication n'est pas aisée puisqu'il faut disposer un adhésif sensible à la pression juste dans la cavité ou sur l'entière surface d'une feuille laminée à l'arrière d'un support ce qui l'expose à une délamination possible de la feuille.

Le document FR2816766 décrit un connecteur pour cartes à puce avec mécanisme de verrouillage. Ce connecteur est muni d'un fond muni de ressort de contacts intégrés et d'un couvercle de fermeture lui étant articulé. Le couvercle de fermeture présente un bras d'encliquetage sur son côté opposé à l'axe de pivotement. Ce bras est susceptible de fléchir dans le plan du couvercle perpendiculairement par rapport à l'axe de pivotement. Un tel connecteur est typiquement intégré dans un téléphone mobile et est destiné à raccorder la carte SIM au circuit électrique interne du téléphone.

Le document WO94/18644 décrit un cadre pour la fixation d'une carte à puce de petite taille. Le cadre présente une périphérie au format d'une carte bancaire. Le cadre permet par exemple de lire une carte SIM dans un lecteur de cartes au format carte bancaire. Le cadre présente une ouverture pour loger la carte SIM. L'ouverture est obturée par un fond muni d'un adhésif pour pouvoir fixer la carte SIM de façon amovible.

Le document FR2827488 décrit un étui pour cartes bancaires destiné à masquer les informations de l'utilisateur lors d'une utilisation de la carte. L'étui comprend deux faces entre lesquelles la carte bancaire est logée. Une fente latérale est formée pour permettre l'extraction de la carte hors de l'étui. Une fenêtre de préhension de la carte s'étend sur une des faces jusqu'à la fente latérale. L'étui présente deux portions articulées de façon à pouvoir accéder à la piste magnétique de la carte à puce tout en masquant les informations de l'utilisateur.

Le document US6554193 décrit une carte à puce munie d'un support plastique dont la puce peut être retirée de façon amovible. Une telle carte à puce permet de changer le support plastique lorsque les informations qui y sont mentionnées sont devenues obsolètes, tout en conservant la puce qui est la partie la plus coûteuse. Ce document prévoit que la puce ne peut être retirée de l'adaptateur qu'en utilisant un outil spécifique afin de limiter les risques de fraude.

L'invention vise à résoudre les problèmes ci- dessus.
Elle a principalement comme objectif la conception d'un adaptateur pour mini-carte qui permette des montages / démontages répétés de la mini-carte dans l'adaptateur sans engendrer de contraintes de flexion sur le corps de carte et par conséquent le microcircuit, tout en étant aisé à fabriquer.
Le principe de l'invention consiste à avoir une structure d'adaptateur qui permette d'élargir suffisamment le périmètre de la cavité de réception de la mini-carte de manière à assurer une mise en place sans contrainte de la mini carte dans la cavité, et de réduire ce périmètre pour un maintien en position de la mini carte. Des moyens sont prévus pour effectuer un verrouillage déverrouillage de l'adaptateur en exerçant une force de blocage en dehors de la zone de réception de la mini-carte.

A cet effet, l'invention a pour objet un support de carte à puce selon la revendication 1.

Selon un mode de réalisation préféré, le corps support comporte une séparation sur l'une des branches pour permettre l'ouverture de la cavité et des moyens d'accrochage complémentaires disposés de chaque côté de la séparation pour permettre une fermeture ou ouverture de la cavité.

Selon d'autres caractéristiques:
- les moyens d'accrochage sont conformés de manière à assurer un verrouillage ou déverrouillage du cadre par déplacement relatif de l'un par rapport à l'autre dans le plan du corps support;
- les moyens d'accrochage sont conformés de manière à assurer un verrouillage ou déverrouillage du cadre par un déplacement relatif de l'un par rapport à l'autre transversalement au plan du corps support;
- le cadre est conformé de manière à présenter une articulation entre ses branches;
- l'articulation est réalisée par un amincissement de branche au voisinage d'au moins un angle du cadre;
- le cadre comporte au moins un chanfrein évidé situé dans un angle interne du cadre pour recevoir un angle de forme complémentaire de la carte à puce,;
- les moyens d'accrochage sont situés à l'extrémité de l'une des branches;
- le support constitue un adaptateur de forme entre le format standard ID-000 (15mm x 25mm) et mini-UICC (15mmx 12mm);
- les moyens d'accrochage comprennent une partie mâle formée à l'extrémité d'une branche inférieure et une partie femelle ménagée dans la branche la plus large.

L'invention a également pour objet un procédé de fabrication d'un support de carte à puce selon la revendiation 16.

D'autres particularités et avantages de l'invention apparaîtront à la lecture de la description, qui suit, donnée à titre d'exemple illustratif et non limitatif, et faite en référence aux figures annexées pour lesquelles :
- la figure 1 est une vue en perspective du support de l'invention contenant une mini-carte selon un mode de réalisation de l'invention ;
- la figure 2 est une vue en perspective du support de l'invention contenant une mini-carte selon un deuxième mode de réalisation de l'invention ;
- la figure 3 illustre une vue partielle d'un agrandissement de la figure précédente;
- la figure 4 est une vue en perspective du support de l'invention selon un troisième mode de réalisation;
- Les figures 5 et 5a illustrent un profil de rainure 25 et nervure;
- la figure 6 est une vue partielle illustrant une variante des moyens d'accrochage;
- la figure 7 est une vue en perspective du support de l'invention selon un quatrième mode de réalisation.

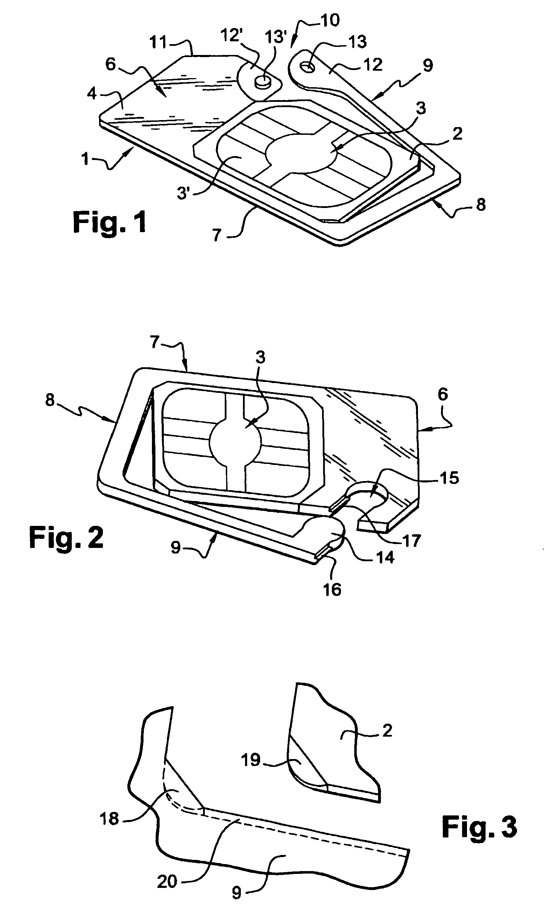

A la figure 1, l'objet de l'invention comprend un support 1 destiné à contenir une mini-carte à puce 2. La carte à puce 2 est dotée d'un module 3 à microcircuit comportant une interface de communication, notamment des plages de contact 3' connectées à une puce de circuit intégré.

Le support 1 comporte un corps support 4 en forme de cadre (appelé également cadre par la suite) renfermant à l'intérieur une cavité ouverte.

Le corps est délimité à l'extérieur par une paroi périphérique externe correspondant à un format standard de carte à puce en l'occurrence le format ID-000 de forme rectangulaire 15 mm x 25 mm avec un détrompeur.

Toutefois, on peut envisager d'autres formats du support, dans le cadre d'une utilisation en tant qu'adaptateur de forme, comme par exemple support ID-1 / Mini carte UICC 3G ou support ID-1 / plug in UICC.

Le cas échéant, plusieurs cadres de supports d'adaptateurs peuvent s'emboîter ou être enserrés l'un dans l'autre par la périphérie. Ainsi, selon le même principe, on peut avoir des adaptateurs multiples par exemple un support au format ID-1 encadrant un support au format plug in UICC lui-même encadrant une carte mini-UICC.

Le corps est délimité à l'intérieur (en position fermée) par une paroi périphérique interne 5 délimitant un espace de réception de mini-carte (ou cavité) conformé de manière à enserrer et/ou positionner la carte à puce.

Le cadre formé par le support comporte en fait quatre branches ou côtés principaux 6, 7, 8, 9 conformées de manière adéquate.

Selon une caractéristique de l'invention, le corps support 1 est apte à s'ouvrir et se refermer de manière à permettre l'insertion ou l'enlèvement de la carte à puce 2. L'écartement élastique inférieur à 0,5 mm n'est pas compris dans la présente définition comme dans l'art antérieur. L'écartement du périmètre visé est nettement supérieur à 0,5 mm.

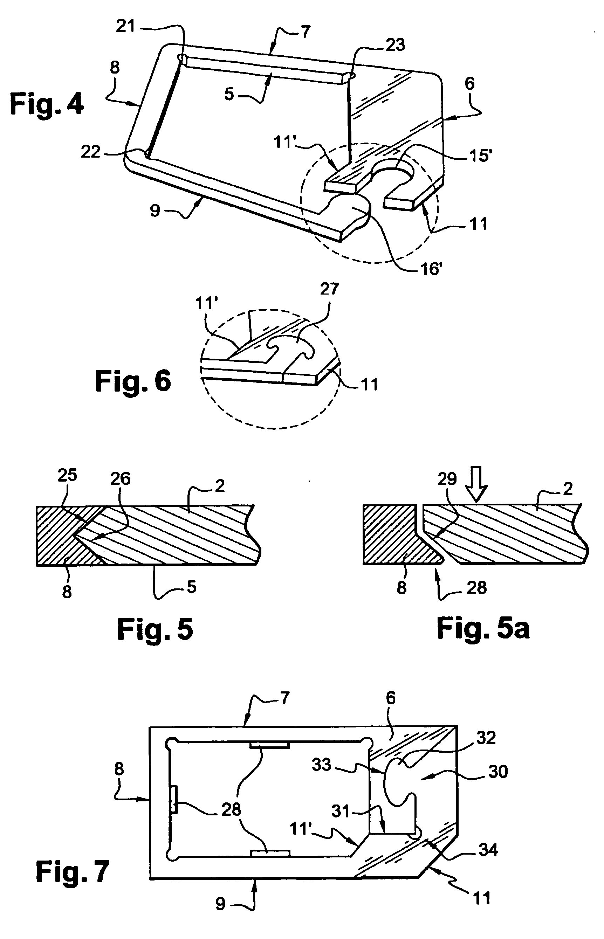

Autrement dit, le cadre possède une géométrie variable, comme une ceinture ou une boucle, entre une configuration d'ouverture (figures 1, 2, 4) et une configuration de fermeture (figure 6). Le support est suffisamment ouvert pour permettre l'insertion et extraction de la carte sans heurt avec le cadre ou du moins sans contact avec l'une des branches entourant la cavité.

Pour réaliser cette fonction, le support comporte une zone de séparation 10 sur le cadre notamment sur l'une de ses branches ou côtés principaux. Dans l'exemple, la branche 9 peut s'écarter en position ouverte du bord de la carte d'environ 1 à 5 mm.

De part et d'autre de la séparation, se trouvent des éléments d'accrochage de forme complémentaire. Dans l'exemple, la séparation est située au voisinage de l'extrémité de la branche inférieure 9, proche du chanfrein détrompeur 11 et la branche latérale adjacente plus large 6. La séparation peut être située ailleurs, notamment plus haut et plus centrée dans la branche 6.

Les éléments d'accrochage sont quant à eux ménagés à chaque extrémité des branches 6 et 9.

Selon une caractéristique, les éléments d'accrochage sont conformés de manière à assurer un verrouillage ou déverrouillage du cadre par un déplacement relatif de l'un par rapport à l'autre transversalement au plan du corps support.

Dans l'exemple, la branche 9 se termine par un méplat 12 perforé formant un oeillet 13; la branche 6 comporte entre les deux chanfreins détrompeurs, un méplat 12' et bouton 13' correspondant respectivement au méplat 13 et oeillet associés. L'avantage dans cet exemple est une bonne stabilité de l'assemblage puisque les méplats constituent un arrêt une fois le bouton introduit dans l'oeillet.

La figure 2, illustre une caractéristique selon laquelle le cadre et notamment les moyens d'accrochage sont conformés de manière à assurer, cette fois, un verrouillage ou déverrouillage des branches du cadre par déplacement relatif de l'une par rapport à l'autre dans le plan du corps support.

En effet, les moyens d'accrochage comprennent une tête 14 disposée sur la branche inférieure 9 et un renfoncement ou port de réception de type femelle 15 apte à recevoir la tête et à la coincer en position du fait de l'élasticité de la matière environnante. Des rainures 16, 17 disposées sur leurs parois ou champs respectifs permettent un maintien par rapport à des efforts transversaux au plan du support.

Le cadre comporte également et de préférence des moyens de positionnement ou centrage sur la paroi ou champ interne. Ces moyens coopèrent avec d'autres moyens de positionnement ou centrage disposés dans le champ ou la tranche de la mini-carte.

Dans l'exemple, ces moyens sont avantageusement disposés dans les angles du cadre, en particulier l'angle adjacent à la branche la plus mobile 9 qui porte un moyen d'accrochage. Ceci de manière à faciliter la cinématique du bras 9.

La figure 3 illustre les moyens de maintien et/ou positionnement de la carte. Ils comprennent d'une part, un évidement angulaire 18 centré dans la paroi du support et situé dans l'angle du cadre, d'autre part un méplat (nervure) situé dans l'angle correspondant de la mini-carte

La branche inférieure 9 peut comporter une rainure longitudinale 20 qui serait le prolongement de l'évidement 18 sur au moins une portion de la branche 9.

L'avantage de cet exemple est de recevoir la nervure d'angle correspondante 19 et d'assurer un guidage et maintien du centrage de la mini-carte en phase de fermeture du cadre.

La figure 4 illustre une caractéristique selon laquelle le cadre comporte en outre des articulations entre certaines de ces branches. Dans l'exemple, ces articulations 21 sont réalisées simplement par une réduction de la largeur de branche (amincissement) dans chaque angle du cadre.

Dans cet exemple, les moyens d'accrochage n'ont pas nécessairement les rainures et nervures 14, 16 comme à la figure 2. L'effet technique produit est dé pouvoir verrouiller et déverrouiller l'accrochage transversalement au plan du support et dans les deux sens transversaux dans la mesure où il n'y a pas de méplat d'arrêt comme à la figure 1.

Les branches n'ont pas nécessairement des moyens de centrage et positionnement disposés sur la paroi périphérique interne au contact de la mini-carte.

Le maintien de la mini-carte peut être assuré simplement par frottement et pression élastique des parois internes des branches constituant le cadre, sans profil concave ou convexe de la paroi interne de la paroi interne du cadre. L'avantage est de permettre une interchangeabilité de carte mini-UICC respectant le format standard.

Pour l'élasticité, l'homme de l'art peut retenir les matériaux courant utilisés dans le domaine de la carte à puce PVC, PET, en injecté ou feuilles laminées.

Dans l'exemple, le cadre est réalisé en ABS.
La figure 5 illustre un profil de rainure 25 et nervure ou biseau 26 relatives à des moyens de centrage pouvant exister sur les parois internes des branches du support et celles de la mini-carte. En particulier, ce profil peut exister notamment sur la branche 8 et paroi adjacente de la mini-carte 2.
La figure 5a illustre un profil asymétrique des moyens de centrage. Au moins l'une des branches du cadre, notamment la branche 8, peut comporter un chanfrein inférieur ou butée 28 en excroissance par rapport à la surface périphérique interne du cadre. La mini-carte 2 comporte un profil complémentaire ou chanfrein inférieur 29.

Ainsi, non seulement le cadre est plus aisé à fabriquer mais il retient la carte par rapport à des efforts exercés sur les plages de contact et représentés par la flèche.

D'autres profils ou formes sont envisageables comme des pointes et perforations correspondantes disposés sur les parois. De préférence, on dispose des griffes (portions de surfaces striées en surépaisseur d'une surface) sur la surface périphérique interne du cadre dans le but d'améliorer le maintien entre la mini-carte et l'adaptateur.

A La figure 6, les moyens d'accrochage présentent un autre profil. La tête 27 est nettement plus élargie que les précédentes; elle a sensiblement un profil similaire à celui d'une ancre ou d'un "T" permettant un bon ancrage dans la branche la plus large 6 entre les deux détrompeurs 11, 11'.

Bien entendu pour assurer une fonction d'adaptateur, les plages 3 de contact de la mini-carte à puce dans le support ou les supports doivent correspondre sensiblement avec l'emplacement normalisé des plages de contact d'une carte au format ID-000 (plug in) ou le cas échéant d'une carte ISO.

Le support peut être fabriqué directement par moulage et/ou usinage, découpage. De préférence, on réalise un moulage ou un usinage du support 1 dans un corps de carte au format ISO et on prévoit des lignes de rupture tout autour des contours pour l'extraire le moment venu.

Dans le procédé de fabrication par moulage injection, on prévoit notamment des moules qui permettent de mouler le support dans une position ouverte dite de repos, (moyens d'accrochage non engagés l'un dans l'autre) comme sur la figure 2, c-à-d la branche portant un moyen d'accrochage est légèrement éloignée de la branche adjacente portant l'autre moyen d'accrochage.

Ainsi, en position repos, la branche est ouverte et lors du déverrouillage du cadre, la branche s'écarte naturellement d'elle-même facilitant l'extraction de la mini-carte.

En position fermée, le cadre est légèrement sous contrainte, une force dans le plan du support tendant à éloigner la branche 9 de l'autre branche.

De préférence, on conçoit la mini-carte et le support à cadre ouvrable ou bras amovible dans le même support de carte au format ISO.

Selon une caractéristique visant à optimiser la fermeture du cadre et déporter les contraintes de fermeture ou ouverture du cadre, le support comporte un moyen d'accrochage 32 déporté sur une branche 30 différente de celle 9 fermant la périphérie du cadre.

Dans l'exemple de la figure 7, les moyens d'accrochage 32, 33 (notamment de type "puzzle" ou de type tenon/mortaise) sont situés sensiblement au milieu de la branche 6. La branche 9 est prolongée par un bras 30 dont la surface est prise sur la surface initiale du bras 6 et perpendiculaire au bras 9. Le bras 30 est articulé au bras 9 par l'intermédiaire d'une articulation 34 située sensiblement en regard du détrompeur 11. La branche 30 vient se rabattre par une rotation autour de l'articulation 34 de l'extérieur vers sur le côté longitudinal de la branche 6.

La branche 6 comporte de préférence une zone d'appui 31 à son extrémité inférieure (petit côté transversal) pour recevoir en butée une zone correspondante du bras 9 lors d'une fermeture de la périphérie de la cavité.

Le bras 30 vient se verrouiller avec la tête 32 dans un creux 33 de la branche 6 une fois que la cavité est complètement fermée et la mini-carte positionnée correctement.

Ainsi, lors du verrouillage de la branche 30 dans la branche 6, notamment par effort transversal au plan principal de la carte, l'effort de pression nécessaire à la fermeture ou ouverture du cadre s'exerce uniquement sur le bras 6. Aucun effort important de verrouillage ou aucune pression des doigts ne s'exerce directement sur la branche inférieure 9 ni sur la carte qui serait en position dans la cavité.

Des branches 7, 8, 9 peuvent comporter des portions de butées inférieures 28 comme sur la figure 5a. Elles sont de préférence centrées sur chaque branche et s'étendent sur un tiers environ de la branche.

## Revendications

1. Support de carte à puce constituant un adaptateur de forme entre deux formats standards de cartes à puce, comportant un corps support (1) en forme de cadre, une cavité dans le corps support et des branches de cadre (6, 7, 8, 9) délimitant ladite cavité, lesdites branches étant conformées de manière à maintenir la carte à puce en place,
**caractérisé en ce qu'**une branche de cadre est apte à s'ouvrir et se refermer de manière à permettre l'insertion ou l'enlèvement de la carte à puce (2).

2. Support de carte à puce, selon la revendication 1, **caractérisé en ce qu'**il comporte une séparation (10) sur l'une des branches (6, 7, 8, 9) pour permettre l'ouverture de la cavité et des moyens d'accrochage complémentaires (12, 13, 15, 16) disposés de chaque côté de la séparation pour permettre une fermeture ou ouverture de la cavité.

3. Support de carte à puce selon l'une des revendications précédentes, **caractérisé en ce que** les moyens d'accrochage sont conformés de manière à assurer un verrouillage ou déverrouillage du cadre (4) par déplacement relatif de l'un par rapport à l'autre dans le plan du corps support.

4. Support de carte à puce, selon l'une des revendications précédentes, **caractérisé en ce que** les moyens d'accrochage sont conformés de manière à assurer un verrouillage ou déverrouillage du cadre (4) par un déplacement relatif de l'un par rapport à l'autre transversalement au plan du corps support.

5. Support de carte à puce selon l'une des revendications précédentes, **caractérisé en ce que** le cadre (4) est conformé de manière à présenter au moins une articulation (21) entre ses branches.

6. Support de carte à puce selon la revendication 5, **caractérisé en ce que** l'articulation est réalisée par une réduction de la largeur de branche au voisinage d'au moins un angle du cadre.

7. Support de carte à puce selon l'une des revendications précédentes, **caractérisé en ce que** le cadre comporte au moins un chanfrein évidé situé dans un angle interne du cadre pour recevoir un angle de forme complémentaire de la carte à puce.

8. Support de carte à puce selon l'une des revendications précédentes, **caractérisé en ce que** les moyens d'accrochage sont situés à l'extrémité de l'une des branches.

9. Support de carte à puce selon l'une des revendications précédentes, **caractérisé en ce qu'**il constitue un adaptateur de forme entre le format standard ID-OOO (15mm x 25mm) et mini-UICC (15mm x 12mm).

10. Support de carte à puce selon l'une des revendications précédentes, **caractérisé en ce que** les moyens d'accrochage comprennent une partie mâle formée à l'extrémité d'une branche inférieure et une partie femelle ménagée dans la branche la plus large.

11. Support de carte à puce selon l'une quelconque des revendications précédentes, **caractérisé en ce qu'**il comporte un moyen d'accrochage (32) déporté sur une branche (30) différente de celle fermant la périphérie de la cavité.

12. Support de carte à puce selon l'une quelconque des revendications précédentes, **caractérisé en ce que** le corps support comporte quatre branches (6, 7, 8, 9) délimitant la cavité.

13. Support de carte à puce selon l'une quelconque des revendications précédentes, **caractérisé en ce que** le cadre en position refermée forme une paroi périphérique interne délimitant la cavité, cette paroi périphérique étant configurée de manière à enserrer la carte à puce.

14. Support de carte à puce selon la revendication 13, **caractérisé en ce** les branches entourent la cavité dans le plan de la carte à puce destinée à y être logée.

15. Support de carte à puce selon l'une quelconque des revendications précédentes, **caractérisé en ce que** les branches ne comportent pas de partie à l'aplomb de la carte à puce destinée à être logée dans la cavité.

16. Procédé de fabrication d'un support de carte à puce constituant un adaptateur de forme entre deux formats standards de cartes à puce et comportant un corps support (1) en forme de cadre, une cavité dans le corps support et des branches de cadre (6, 7, 8, 9) délimitant ladite cavité, le procédé comprenant le moulage du corps support (1) de sorte que deux desdites branches de cadre (6,9) aptes à ouvrir et refermer le cadre autour d'une séparation sont éloignées de sorte que le support issu du moulage est dans une position de branche ouverte dite de repos.

## Claims

1. A support for a chip card composing a form adapter between two standard chip card formats, including a frame-shaped support body (1), a cavity in the support body and frame branches being so designed as to hold the chip card in position,
**characterized in that** a frame branch is able to open and close so as to enable the insertion or the removal of the chip card (2).

2. A support for a chip card according to claim 1, **characterized in that** it includes a partition (10) on one of the branches (6, 7, 8, 9) to enable the opening of the cavity and additional connection means (12, 13, 15, 16) positioned on either side of the partition to enable the opening or the closing of the cavity.

3. A support for a chip card according to one of the preceding claims, **characterized in that** the connection means is so designed as to provide the locking or unlocking of the frame (4) through the relative displacement of the one with respect to the other in the plane of the support body.

4. A support for a chip card according to one of the preceding claims, **characterized in that** the connection means is so designed as to provide the locking or unlocking of the frame (4) through the relative displacement of the one with respect to the other transversally to the plane of the support body.

5. A support for a chip card according to one of the preceding claims, **characterized in that** the frame (4) is so designed as to have at least one joint (21) between the branches thereof.

6. A support for a chip card according to claim 5, **characterized in that** the joint is provided by a reduction in the width of the branch close to at least one angle of the frame.

7. A support for a chip card according to one of the preceding claims, **characterized in that** the frame includes at least one cut chamfer located in an internal angle of the frame to receive a matching angle of the chip card.

8. A support for a chip card according to one of the preceding claims, **characterized in that** the connection means is located at the end of one of the branches.

9. A support for a chip card according to one of the preceding claims, **characterized in that** it composes a form adapter between the ID-000 (15mm x 25mm) and the mini-UICC (15mm x 12mm) standard formats.

10. A support for a chip card according to one of the preceding claims, **characterized in that** the connection means includes a male part formed at the end of a lower branch and a female part arranged in the widest branch.

11. A support for a chip card according to any one of the preceding claims, **characterized in that** it includes connection means (32) shifted onto a branch (30) different from the one closing the periphery of the cavity.

12. A support for a chip card according to any one of the preceding claims, **characterized in that** the support body includes four branches (6, 7, 8, 9) delimiting the cavity.

13. A support for a chip card according to any one of the preceding claims, **characterized in that**, in the closed position, the frame forms an internal peripheral wall delimiting the cavity, such peripheral wall being so configured as to surround the chip card.

14. A support for a chip card according to claim 13, **characterized in that** the branches surround the cavity in the plane of the chip card intended to be accommodated therein.

15. A support for a chip card according to any one of the preceding claims, **characterized in that** the branches include no part in line with the chip card intended to be accommodated in the cavity.

16. A method for manufacturing a support for a chip card composing a form adapter between two standard chip card formats and including a frame-shaped support body (1), a cavity in the support body and frame branches (6, 7, 8, 9) delimiting said cavity, the method including the moulding of the support body (1) so that two of said frame branches (6, 9), able to open and close the frame about a partition, are distant, such that the support resulting from the moulding is in an open branch position, also called a rest position.

## Patentansprüche

1. Chipkartenträger, der einen Formadapter zwischen zwei Standardformaten von Chipkarten bildet, der einen Trägerkörper (1) in Form eines Rahmens umfaßt, eine Austiefung im Trägerkörper und Rahmenzweige (6, 7, 8, 9), die die besagte Austiefung abgrenzen, wobei die besagten Zweige so angepaßt sind, daß sie die Chipkarte festhalten,
**dadurch gekennzeichnet, daß** ein Rahmenzweig geeignet ist, sich zu öffnen und zu schließen, damit die Chipkarte (2) eingesetzt und herausgenommen werden kann.

2. Chipkartenträger nach Anspruch 1, **dadurch gekennzeichnet, daß** er auf einem der Zweige (6, 7, 8, 9) eine Trennung (10) umfaßt, damit die Austiefung und ergänzende Anhängemittel (12, 13, 15, 16) geöffnet werden können, die zu beiden Seiten der Trennung angeordnet sind, damit die Austiefung geschlossen und geöffnet werden kann.

3. Chipkartenträger nach einem beliebigen der vorstehenden Ansprüche, **dadurch gekennzeichnet, daß** die Anhängemittel so angepaßt sind, daß sie eine Verriegelung oder Entriegelung des Rahmens (4) durch relative Verschiebung des einen zum anderen in der Ebene des Trägerkörpers gewährleisten.

4. Chipkartenträger nach einem beliebigen der vorstehenden Ansprüche, **dadurch gekennzeichnet, daß** die Anhängemittel so angepaßt sind, daß sie eine Verriegelung oder Entriegelung des Rahmens (4) durch relative Verschiebung des einen zum anderen quer zur Ebene des Trägerkörpers gewährleisten.

5. Chipkartenträger nach einem beliebigen der vorstehenden Ansprüche, **dadurch gekennzeichnet, daß** der Rahmen (4) so angepaßt ist, daß er zumindest ein Gelenk (21) zwischen seinen Zweigen aufweist.

6. Chipkartenträger nach Anspruch 5, **dadurch gekennzeichnet, daß** das Gelenk durch eine Verringerung der Breite des Zweigs in der Nähe von mindestens einem Winkel des Rahmens ausgeführt ist.

7. Chipkartenträger nach einem beliebigen der vorstehenden Ansprüche, **dadurch gekennzeichnet, daß** der Rahmen zumindest eine Hohlfase umfaßt, die sich in einem Innenwinkel des Rahmens befindet, um einen Winkel in ergänzender Form der Chipkarte aufzunehmen.

8. Chipkartenträger nach einem beliebigen der vorstehenden Ansprüche, **dadurch gekennzeichnet, daß** sich die Anhängemittel am Ende eines der Zweige befinden.

9. Chipkartenträger nach einem beliebigen der vorstehenden Ansprüche, **dadurch gekennzeichnet, daß** er einen Formadapter zwischen dem Standardformat ID-OOO (15 mm x 25 mm) und Mini-UICC (15 mm x 12 mm) bildet.

10. Chipkartenträger nach einem beliebigen der vorstehenden Ansprüche, **dadurch gekennzeichnet, daß** die Anhängemittel einen am Ende eines unteren Zweigs erhabenen Teil und einen im breitesten Zweig gestalteten aufnehmenden Teil umfassen.

11. Chipkartenträger nach einem beliebigen der vorstehenden Ansprüche, **dadurch gekennzeichnet, daß** er ein Anhängemittel (32) umfaßt, das auf einem anderen (30) als dem Zweig versetzt ist, der die Peripherie der Austiefung schließt.

12. Chipkartenträger nach einem beliebigen der vorstehenden Ansprüche, **dadurch gekennzeichnet, daß** der Trägerkörper vier Zweige (6, 7, 8, 9) umfaßt, die die Austiefung abgrenzen.

13. Chipkartenträger nach einem beliebigen der vorstehenden Ansprüche, **dadurch gekennzeichnet, daß** der Rahmen in geschlossener Stellung eine innere periphere Wand bildet, die die Austiefung abgrenzt, wobei diese periphere Wand so konfiguriert ist, daß sie die Chipkarte einschließt.

14. Chipkartenträger nach Anspruch 13, **dadurch gekennzeichnet, daß** die Zweige die Austiefung in der Ebene der Chipkarte umgeben, die dort eingebracht werden soll.

15. Chipkartenträger nach einem beliebigen der vorstehenden Ansprüche, **dadurch gekennzeichnet, daß** die Zweige keinen Teil senkrecht von der Chipkarte umfassen, die in die Austiefung eingebracht werden soll.

16. Verfahren für die Herstellung eines Chipkartenträgers, der einen Formadapter zwischen zwei Standardformaten von Chipkarten bildet und einen Trägerkörper (1) in Form eines Rahmens umfaßt, eine Austiefung im Trägerkörper und Rahmenzweige (6, 7, 8, 9), die die besagte Austiefung abgrenzen, wobei das Verfahren das Gießen des Trägerkörpers (1) umfaßt, so daß zwei der besagten Rahmenzweige (6, 9), die geeignet sind, den Rahmen um eine Trennung zu schließen, entfernt sind, so daß der aus dem Gießen hervorgegangene Träger in einer offenen Zweigposition, einer sogenannten Ruheposition, ist.
